# EUROPEAN PATENT APPLICATION

(11) **EP 4 666 859 A1**
(43) Date of publication of application: **24.12.2025**
(21) Application number: 24182820.1
(22) Date of filing: 18.06.2024
(51) Int. Cl.: A23B 7/005, A23B 7/10, A23B 7/155, A23L 19/00, A23L 19/20

(54) **METHOD FOR MAKING VEGAN KIMCHI DISTRIBUTED AT ROOM TEMPERATURE**

(71) Applicant: FoodBerry Co., Ltd., Andong-si Gyeongsangbuk-do (KR)
(72) Inventor: Ko, Yong Duck, Gyeongsangnam-do (KR); Jang, Jin Su, Gyeongsangbuk-do (KR)
(74) Representative: RGTH

(57) **Abstract**

The present invention relates to a method for making vegan kimchi distributed at room temperature, which includes (1) selecting napa cabbage for salting, cutting the napa cabbage into a predetermined size, soaking the cut napa cabbage in brine having a salt concentration of 4% to 5% at 15°C to 25°C for 10 to 18 hours, and then performing desalting and washing to prepare salted napa cabbage; (2) mixing white radish at 18% to 22%, green onion at 5% to 7%, onion at 5% to 7%, cabbage at 2.5% to 3.5%, whole garlic at 1.5% to 2.5%, dried shiitake mushrooms at 1.0% to 2.0%, kelp at 0.3% to 0.6%, water at 58% to 61% by weight and heating the mixture for 9 to 11 hours to prepare vegetable broth; (3) preparing the salted napa cabbage to be a proportion of 75% to 79% based on 1 kg of kimchi and kimchi condiment containing the vegetable broth at 4.5% to 6.0%, white radish at 4.0% to 5.0%, red pepper powder at 2.5% to 3.0%, salt at 2.2% to 2.8%, garlic at 1.7% to 2.1%, plum concentrate at 1.6% to 2.0%, glutinous rice paste at 0.4% to 0.6%, green onion at 0.8% to 1.2%, onion at 0.2% to 0.4%, ginger at 0.3% to 0.5%, white sugar at 0.5% to 0.7%, lactic acid bacteria at 0.04% to 0.06%, soybean flour at 4% to 0.6%, and enzymatically modified stevia at 0.005% to 0.007%; and (4) mixing the prepared salted napa cabbage with the prepared vegetable broth and kimchi condiment at a ratio of 70:30.

The present invention is intended to provide a process for making vegan kimchi distributed at room temperature in which the condiment composition is prepared by adding soybean flour, shiitake mushrooms and the like instead of salted seafood necessary for the growth of kimchi lactic acid bacteria to supply a nitrogen source and green tea extract (0.5% to 1%) to control the fermentation speed, sterilization is carried out by stir-frying in a pot when the vegan kimchi reaches the most delicious ripening point (pH 4.2 to 4.5), then the vegan kimchi is filled in glass bottles, and a steam sterilization process is performed to eliminate the causes of customer complaints such as kimchi swelling during distribution at room temperature or poor product quality due to excessive fermentation.

## Description

### BACKGROUND OF THE INVENTION

### Field of the Invention

The present invention relates to a method and a device for making vegan kimchi distributed at room temperature.

### Description of the Related Art

Kimchi is Korea's transitional and representative fermented food made by mixing vegetables soaked in brine having a low salt concentration with condiments such as red pepper, green onions, garlic, ginger, and salted seafood and fermenting the mixture at a low temperature.

First, in the initial stage of the kimchi fermentation process, the Leuconostoc mesenteroides strain, a kind of heterofermentative lactic acid bacteria, begins to grow and produces carbon dioxide, lactic acid, acetic acid, ethanol and other volatile metabolites, giving kimchi a unique and complex flavor, and at the same time a refreshing and deep taste, and the normal kimchi fermentation process is induced by maintaining the internal environment of kimchi in an anaerobic state to strongly suppresses the growth of aerobic bacteria.

Next, when the kimchi fermentation process reaches the middle stage, the number of Leuconostoc mesenteroides strain drastically decreases and the Lactobacillus Plantarium strain, a kind of homofermentative lactic acid bacteria, actively proliferates and produces a large amount of lactic acid, increasing the intensity of sour taste and participating in the rancidity of kimchi.

Accordingly, as the end stage of the kimchi fermentation process arrives, the internal environment of kimchi becomes acidic by the Lactobacillus Plantarium strain, thus the growth of the Leuconostoc mesenteroides strain gradually decreases but the growth of the Lactobacillus Plantarium strain gradually increases, and the refreshing and deep taste of kimchi disappears but only the degree of sour taste gradually increases.

Therefore, in order to maintain the deep and refreshing taste of kimchi, it is important to maintain the growth of the Leuconostoc mesenteroides strain but to suppress the growth of the Lactobacillus Plantarium strain as much as possible. In relation to this, prior literatures on the prior art designed to reduce the sour taste of kimchi and increase the storage period of kimchi include Korean Patent Publication No. 10-0181009 titled "Method for adding Leuconostoc mesenteroides as starter when making kimchi" (hereinafter referred to as 'prior art 1').

However, technologies that delay the rancidity of kimchi by inhibiting the growth of existing strains of the Genus Lactobacillus, including the prior art 1, cannot effectively and completely suppress the growth of strains of the Genus Lactobacillus, which are the main cause of the sour taste of kimchi and are strains greatly resistant to acids, and cannot fundamentally solve the problems that the sour taste of kimchi becomes stronger and the storage period of kimchi is not long.

Accordingly, a number of studies have recently been conducted to control the growth speed of lactic acid bacteria and thus solve the problems with the storage period of kimchi mentioned above. Prior literatures on the prior art designed with regard to this include Korean Patent Publication No. 10-0665279 titled "Method for making kimchi containing microencapsulated lactic acid bacteria with a remarkable shelf life" (hereinafter referred to as 'prior art 2').

Additionally, as kimchi became recognized as a health food, the West also began to take interest in Korean kimchi, and in order to further increase the health functionality of kimchi, a variety of kimchi containing various herbal medicines such as ginseng and eucalyptus have been developed, but the development level of kimchi still remains at a low level.

Vegetarians are classified into various degrees, including pesco-vegetarian, lacto-ovo-vegetarian, ovo-vegetarian, lacto-vegetarian, and vegan. A vegan is a person who eats a completely pure vegetarian diet, does not consume meat, fish, shellfish as well as eggs or dairy products, does not consume even Osinchae (green onions, chives, wild chives, garlic, Ferula assa-foetida), and thus do not consume general salted seafood or napa cabbage kimchi made using green onions and garlic.

Korean Patent Publication No. 2016-0124586 discloses a method for making hooker chives and napa cabbage kimchi and Korean Patent No. 1832232 discloses a method for making napa cabbage kimchi using ginseng sprouts. But these are different from the method for making napa cabbage kimchi for vegetarians without adding animal raw materials and Osinchae of the present invention.

### SUMMARY OF THE INVENTION

The present invention has been designed to solve the above problems, and an object thereof is to provide a method for making napa cabbage kimchi that can be safely consumed by vegetarians as well as has increased taste and palatability and improved functionality such as DPPH radical scavenging ability, by which kimchi hardly goes rancid, the storage period is increased, and at the same time, making conditions such as selection and mixing of auxiliary ingredients are optimized to make napa cabbage kimchi of excellent quality and palatability without using animal ingredients such as salted seafood.

The present invention provides a method for making vegan kimchi distributed at room temperature, which includes (1) selecting napa cabbage for salting, cutting the napa cabbage into a predetermined size, soaking the cut napa cabbage in brine having a salt concentration of 4% to 5% at 15°C to 25°C for 10 to 18 hours, and then performing desalting and washing to prepare salted napa cabbage; (2) mixing white radish at 18% to 22%, green onion at 5% to 7%, onion at 5% to 7%, cabbage at 2.5% to 3.5%, whole garlic at 1.5% to 2.5%, dried shiitake mushrooms at 1.0% to 2.0%, kelp at 0.3% to 0.6%, water at 58% to 61% by weight and heating the mixture for 9 to 11 hours to prepare vegetable broth; (3) preparing the salted napa cabbage to be a proportion of 75% to 79% based on 1 kg of kimchi and kimchi condiment containing the vegetable broth at 4.5% to 6.0%, white radish at 4.0% to 5.0%, red pepper powder at 2.5% to 3.0%, salt at 2.2% to 2.8%, garlic at 1.7% to 2.1%, plum concentrate at 1.6% to 2.0%, glutinous rice paste at 0.4% to 0.6%, green onion at 0.8% to 1.2%, onion at 0.2% to 0.4%, ginger at 0.3% to 0.5%, white sugar at 0.5% to 0.7%, lactic acid bacteria at 0.04% to 0.06%, soybean flour at 0.4% to 0.6%, and enzymatically modified stevia at 0.005% to 0.007%; and (4) mixing the prepared salted napa cabbage with the prepared vegetable broth and kimchi condiment at a ratio of 70:30 to make kimchi.

The kimchi made as above is ripened under conditions of a fermentation temperature of 15°C ± 5°C and a ripening time of 48 ± 12 hours until the pH reaches 4.3 to 4.7.

In addition, the ripened kimchi is filled in a container and sterilized by heating using a sterilization device consisting of a hot water tank or a steam sterilization tank under conditions of 95°C ± 5°C and 60 ± 10 minutes based on the sterilization device and 80°C ± 5°C and 15 ± 5 minutes based on the internal temperature of the kimchi, and intermittent temperature pattern control with two rest periods at 5-minute intervals is performed to prevent kimchi liquid inside the container from sticking.

Moreover, a shrink film and a label are attached to the sterilized kimchi container, cooling is performed to apply contraction vacuum pressure to the inside of the kimchi container so that the inside of the kimchi container is maintained in a completely sealed state, and then the kimchi container is stored in a refrigerator at a low temperature.

### BRIEF DESCRIPTION OF THE DRAWINGS

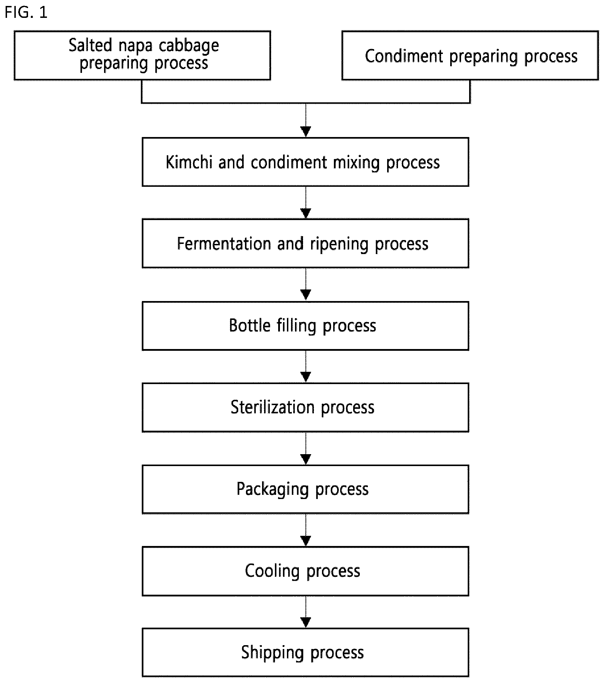

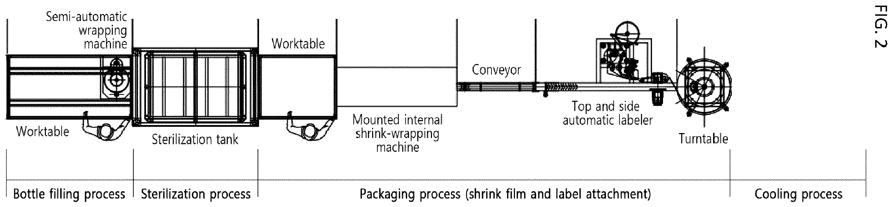

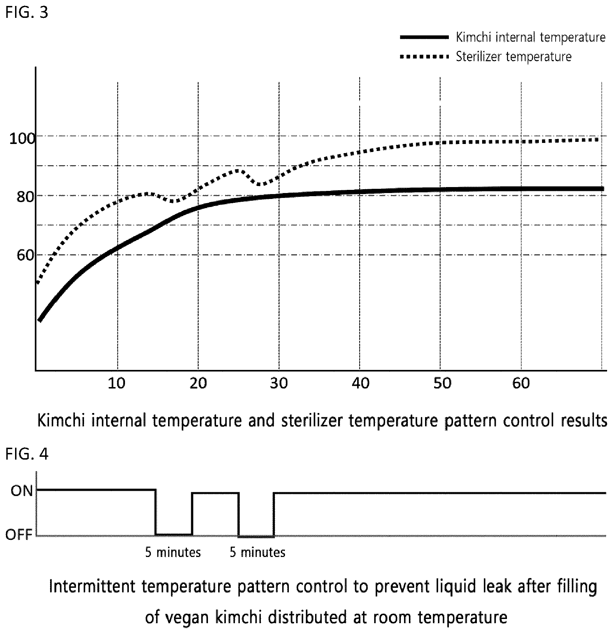

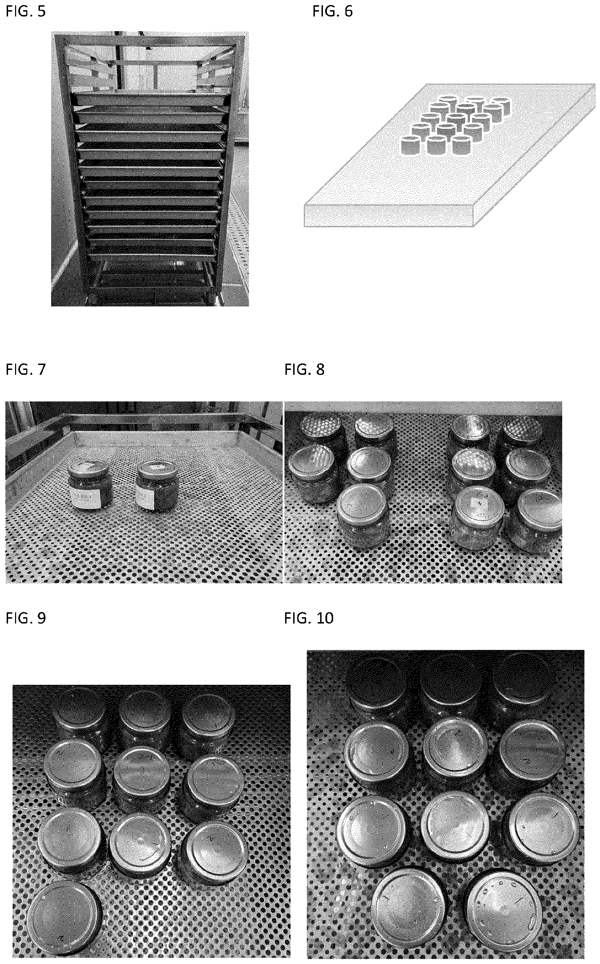

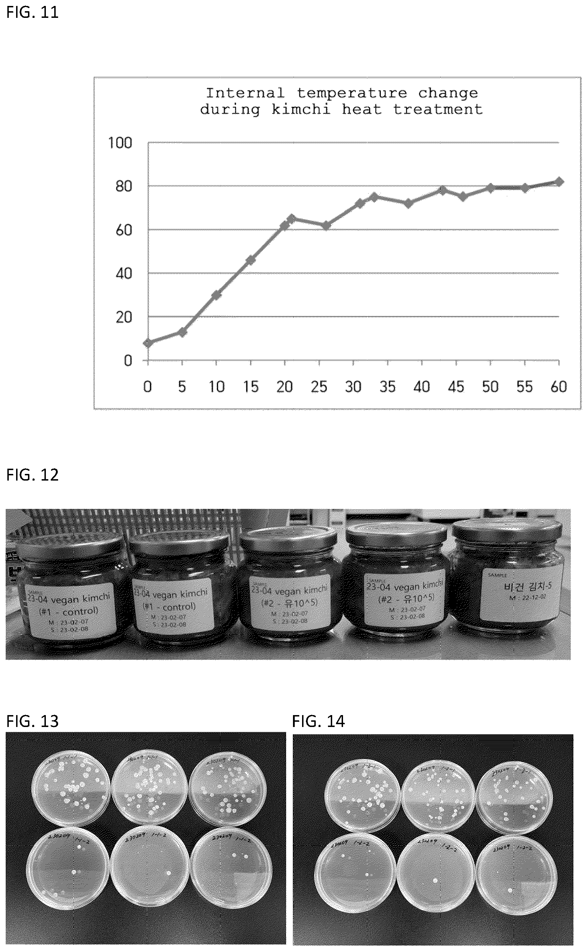

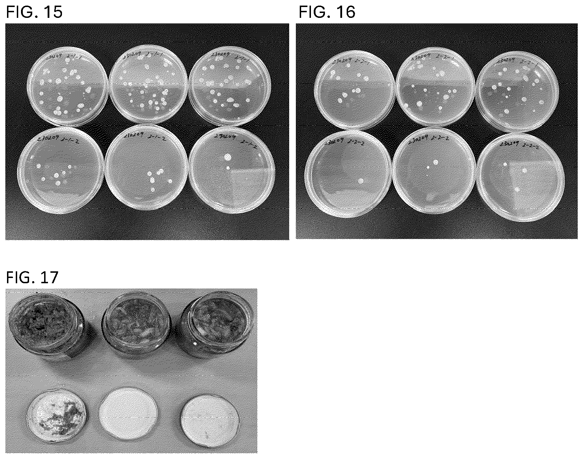

FIGS. 1 to 4 are diagrams illustrating the overall making process and characteristics of the method for making vegan kimchi distributed at room temperature according to an embodiment of the present invention. FIG. 5 illustrates location of sample tray placed on tray rack. FIG. 6 illustrates location of sample and dummy sample on tray. FIG. 7 illustrates upper part of the tray rack. FIG. 8 illustrates layer immediately below upper part in preparation for steam. FIG. 9 illustrates middle part of the tray rack. FIG. 10 illustrates lower part of the tray rack. FIG. 11 is a diagrams illustrating the internal temperature change during kimchi heat treatment. FIG. 12 illustrates samples used in experiment. FIGS. 13 to 16 illustrate the incubation results. FIG. 17 illustrates samples for the viable bacteria count results.

### DETAILED DESCRIPTION OF THE PREFERRED EMBODIMENTS

In order to fully understand the present invention, its operational advantages, and the purposes achieved by practicing the present invention, reference should be made to the accompanying drawings illustrating preferred embodiments of the present invention and the contents described in the accompanying drawings.

Hereinafter, the present invention will be described in detail by explaining preferred embodiments of the present invention with reference to the accompanying drawings. However, the present invention may be implemented in many different forms and is not limited to the described embodiments. In order to clearly describe the present invention, parts that are not relevant to the description are omitted, and like reference numerals in the drawings indicate like members.

Hereinafter, various embodiments of this document are described with reference to the accompanying drawings. However, this is not intended to limit the technology described in this document to specific embodiments, and should be understood to include various modifications, equivalents, and/or alternatives to the embodiments of this document. In connection with the description of the drawings, similar reference numbers may be used for similar components.

In this document, expressions such as "include" or "may include" refer to the presence of the corresponding feature (for example: a numerical value, a function, an operation, or a component such as a part) and do not exclude the presence of additional features.

Terms used in this document are merely used to describe specific embodiments and may not be intended to limit the scope of other embodiments. Singular expressions may include plural expressions, unless the context clearly dictates otherwise. Terms used herein, including technical or scientific terms, may have the same meaning as commonly understood by those skilled in the art described in this document. Among the terms used in this document, terms defined in general dictionaries may be interpreted to have the same or similar meaning as the meaning they have in the context of related technology, and unless clearly defined in this document, will not be interpreted in an idealized or overly formal sense. In some cases, even terms defined in this document cannot be interpreted to exclude embodiments of this document.

It is a matter of course that various modifications can be made by those skilled in the art to which the present invention belongs without departing from the gist of the present invention as claimed in the claims of the present invention, and these modified implementations should not be understood individually from the technical idea or perspective of the present invention.

FIGS. 1 to 4 are diagrams illustrating the overall making process and characteristics of the method for making vegan kimchi distributed at room temperature according to an embodiment of the present invention.

The method for making vegan kimchi distributed at room temperature according to an embodiment of the present invention proceeds through the following processes.

Vegan kimchi making, which is an embodiment of the present invention, excludes animal raw materials, fish, and salted seafood and is constituted so that fermented kimchi of salted vegetables can be distributed at room temperature.

Looking at this method, (1) a step of selecting napa cabbage for salting, cutting the napa cabbage from which inedible portions have been removed into a predetermined size, soaking the cut napa cabbage in brine having a salt concentration of 4% to 5% at 15°C to 25°C for 10 to 18 hours, and then performing desalting and washing to prepare salted napa cabbage is performed.

First, the predetermined size and the state are checked to select napa cabbage, the selected cabbage is cut into a predetermined appropriate size (about 2 cm × 2 cm in the embodiment of the present invention) and then salted. At this time, it is desirable that the salt concentration is approximately 4% to 5% and the salting time is about 10 to 18 hours.

Afterwards, the desalting/washing process is performed, water is removed from the salted napa cabbage for a predetermined time to complete the preparation of salted napa cabbage.

Next, (2) a step of mixing white radish at 18% to 22%, green onion at 5% to 7%, onion at 5% to 7%, cabbage at 2.5% to 3.5%, whole garlic at 1.5% to 2.5%, dried shiitake mushrooms at 1.0% to 2.0%, kelp at 0.3% to 0.6%, water at 58% to 61% by weight and heating the mixture for 9 to 11 hours to prepare vegetable broth is performed.

**[Table 1]**

| Ratio for preparation of vegetable broth | | |
|---|---|---|
| Raw materials for vegetable broth | Based on 1 kg of vegetable broth | Mixing ratio (%) |
| White radish | 200g | 18-22% |
| Green onion | 60g | 5-7% |
| Onion | 60g | 5-7% |
| Cabbage | 30g | 2.5-3.5% |
| Whole garlic | 2g | 1.5-2.5% |
| Dried shiitake mushrooms | 1.5g | 1.0-2.0% |
| Kelp | 0.5g | 0.3-0.6% |
| Water | 610g | 58~61% |

At this time, the vegetable broth is prepared by brewing an extract (sugar concentration is approximately 3 to 5 brix) from raw materials and water mixed at a predetermined ratio (1:50 to 100) over high heat for 10 minutes , medium heat for 10 minutes, and low heat for 40 minutes, and the vegetable broth is mixed with auxiliary ingredients such as red pepper powder and garlic to prepare the vegan kimchi condiment.

A condiment liquid was prepared by mixing auxiliary ingredients (specific kinds and contents of ingredients) and boiling the mixture for approximately 1 hour.

Then, (3) a step of preparing the salted napa cabbage to be a proportion of 75% to 79% based on 1 kg of kimchi and preparing kimchi condiment containing the vegetable broth at 4.5% to 6.0%, white radish at 4.0% to 5.0%, red pepper powder at 2.5% to 3.0%, salt at 2.2% to 2.8%, garlic at 1.7% to 2.1%, plum extract at 1.6% to 2.0%, glutinous rice paste at 0.4% to 0.6%, green onion at 0.8% to 1.2%, onion at 0.2% to 0.4%, ginger at 0.3% to 0.5%, white sugar at 0.5% to 0.7%, lactic acid bacteria at 0.04% to 0.06%, soybean flour at 0.4% to 0.6%, and enzymatically modified stevia at 0.005% to 0.007% is performed.

**[Table 2]**

| Ingredients of kimchi condiment | | |
|---|---|---|
| Raw materials for condiment preparation | Added amount based on 1 kg | Mixing ratio |
| Salted napa cabbage | 77g | 75-79% |
| Vegetable broth | 5.9g | 4.5-6.0% |
| White radish | 4.5g | 4.0-5.0% |
| Red pepper powder | 3.0g | 2.5-3.5% |
| Salt | 2.6g | 2.2-2.8% |
| Garlic | 1.9g | 1.7-2.1% |
| Plum concentrate | 1.8g | 1.6-2.0% |
| Glutinous rice paste | 0.5g | 0.4-0.6% |
| Green onion | 1.0g | 0.8-1.2% |
| Onion | 0.3g | 0.2-0.4% |
| Ginger | 0.4g | 0.3-0.5% |

| White sugar | 0.6g | 0.5-0.7% |
|---|---|---|
| Lactic acid bacteria | 0.05g | 0.04-0.06% |
| Soybean flour | 0.5g | 0.4-0.6% |
| Enzymatically modified stevia | 0.006g | 0.005-0.007% |
| | | |

(4) A step of mixing the prepared salted napa cabbage with the prepared vegetable broth and kimchi condiment at a ratio of 70:30 is performed later.

As the next step, the kimchi made as above is ripened under conditions of a fermentation temperature of 15°C ± 5°C and a ripening time of 48 ± 12 hours until the pH reaches 4.3 to 4.7.

Thereafter, a step of filling a predetermined amount of kimchi in a predetermined container, a glass container in an embodiment of the present invention, and then sealing the container is performed.

At this time, the ripened kimchi is filled in a container and sterilized by heating using a sterilization device consisting of a hot water tank or a steam sterilization tank under conditions of 95°C ± 5°C and 60 ± 10 minutes based on the sterilization device and 80°C ± 5°C and 15 ± 5 minutes based on the internal temperature of the kimchi, and intermittent temperature pattern control with two rest periods at 5-minute intervals is performed to prevent kimchi liquid inside the container from sticking.

In the next process, a shrink film and a label are attached to the sterilized kimchi container, cooling is performed to apply contraction vacuum pressure to the inside of the kimchi container so that the inside of the kimchi container is maintained in a completely sealed state, and then the kimchi container is stored in a refrigerator at a low temperature.

Below, the conditions, results and the like of the sterility test conducted on vegan kimchi distributed at room temperature, which is made through this making method will be described.

### 1. Purpose of experiment

As a result of steam sterilization in the previous experiment, sterile results were obtained in all experimental groups. The present experiment was conducted to set the conditions under which the kimchi condiment was prepared and mixed with salted napa cabbage and then steam sterilization was carried out.

### 2. Experimental conditions

### 1) Sample preparation

**[Table 3]**

| **Order** | **Raw materials** | **Sample 1 (common)** | **Sample 2 (lactic acid bacteria 10^5)** |
|---|---|---|---|
| 1 | Salted napa cabbage | 55.00% | 55.00% |
| 4 | Broth | 23.50% | 23.50% |
| 8 | White radish | 8.01% | 8.01% |
| 5 | Garlic | 3.02% | 3.02% |
| 2 | Red pepper powder | 2.50% | 2.50% |
| 10 | Glutinous rice paste | 1.94% | 1.94% |
| 11 | Plum concentrate | 1.80% | 1.80% |
| 7 | Onion | 1.49% | 1.49% |
| 3 | Salt | 1.22% | 1.22% |
| 6 | Ginger | 0.81% | 0.81% |
| 9 | White sugar | 0.71% | 0.70% |
| 12 | Lactic acid bacteria | | 0.01% |
| | Total | 100.00% | 100.00% |

The samples used in the present experiment were samples 1 and 2. The samples 1 and 2 were designated as experimental groups, and one control sample and one prepared by adjusting the weight of sterilized kimchi to check the leaked liquid were additionally designated as comparison groups.

### 2) Preparation for sterilization

- Samples are placed on a tray as shown in FIG. 5 that goes into the steam sterilizer, and dummy bottles are prepared and placed on the tray as shown in FIG. 6 for an environment similar to that for production.
- Trays are placed at the upper as shown in FIG. 7, middle as shown in FIG. 9, and lower parts as shown in FIG. 10 of the tray rack so that how sterilization is carried out at various parts inside the steam sterilizer can be checked.
- Trays placed for an additional 10 minutes are also located at the same parts.

### 3) Sterilization conditions

**[Table 4]**

| | Sterilization time of experimental group (min) | | Sterilization time of control group (min) | |
|---|---|---|---|---|
| Lid closed state | 50 min | 60 min | 50 min | 60 min |
| Control | 15 | 15 | (For leakage check) 2 | (For leakage check) 2 |
| Lactic acid bacteria 10^5 | 15 | 15 | (Ripened kimchi) 2 | (Ripened kimchi) 2 |
| Set temperature | 100°C (Set temperature of machine) | | | |

- Total number of experimental samples used: 60, number of control samples used: 8

### 4) Sterilization method

- Sterilization is carried out at a set temperature of 100°C for 50 minutes and 60 minutes respectively, during which the operation is stopped for 5 minutes when the temperature reaches 65°C and then restarted. The operation is stopped for 5 minutes when the temperature reaches 75°C as well and then restarted.
- This is to provide a delay in order to prevent the temperature difference between the inside of the steam sterilizer and the inside of the glass bottle from increasing.
- The steam sterilizer is operated for 50 minutes from the first operation, and is stopped for 5 minutes at 65°C and for 5 minutes at 75°C, and thus when sterilization is carried out for a total of 50 minutes, 50min sterilization is completed. In the same manner, 60min sterilization is carried out.

### 3. Carrying out of microbiological experiment

**[Table 5]**

| Spreading of stock solution and diluted solution of each sample on PCA (plate count agar) and incubation | | | | |
|---|---|---|---|---|
| Experimental conditions | Medium used | Temperature | Incubation time | Machine used |
| Experimental conditions | PCA | 36°C | 24hr | incubator |

### 4. Experimental results

### 1) Measurement of temperature change depending on sterilization work time

**[Table 6]**

| Elapsed time | Temperature | | Handling state |
|---|---|---|---|
| | Set temperature | Actual temperature | Handling state |
| 0 | 1 | 8 | Start operation |
| 5 | 40 | 13 | |
| 10 | 66 | 30 | |
| 15 | 80 | 46 | |
| 20 | 89 | 62 | |
| 21 | 90 | 65 | Stop working, start 5-minute break |
| 26 | 84 | 62 | End 5-minute break, start working |
| 31 | 96 | 72 | |
| 33 | 95 | 75 | Stop working, start 5-minute break |
| 38 | 91 | 72 | End 5-minute break, start working |
| 43 | 96 | 78 | |
| 46 | 100 | 84 | Stop working, take out 50 min product |
| 50 | 84 | 65 | Start working |
| 55 | 89 | 79 | |
| 60 | 98 | 82 | Stop working, take out 60 min product |

Internal temperature immediately after taking out 50 min product: 82.7°C, internal temperature immediately after taking out 60 min product: 86.2°C
- It was found that the temperature decreased slightly each time the operation was stopped for 5 minutes at 65°C and for 5 minutes at 75°C, and the temperature increased from the lowered temperature when the operation was performed again.
- The temperature reached 100°C, the set temperature, after 46 minutes, and the actual temperature was 84°C. At this time, the first experimental group was taken out. Thereafter, the operation was restarted to perform sterilization for an additional 10 minutes, and then the second experimental group was taken out.

### 2) Measurement of numerical values of experimental group

**[Table 8]**

| Product name | Date of manufacture | Date of measurement | pH | Salinity | Sugar content |
|---|---|---|---|---|---|
| Broth | Feb. 07, 2023 | Feb. 07, 2023 | 5.82 | 0.33 | 3.1 |
| Kimchi condiment | " | " | 4.59 | 2.25 | 15 |
| #1 (common vegan kimchi) | " | " | 4.8 | 1.94 | 12.4 |
| #2 (vegan kimchi with lactic acid bacteria) | " | " | 4.87 | 1.81 | 12 |
| #1-after 24hr ripening | " | Feb. 08, 2023 | 5.16 | 1.8 | 10.7 |
| #2-after 24hr ripening | " | " | 5.14 | 1.78 | 10.1 |
| #1-after steam sterilization | " | " | 5.11 | 1.78 | 10.5 |
| #2-after steam sterilization | " | " | 5.18 | 1.71 | 10.4 |

### 3) Weight change

**[Table 9]**

| Weight change | | | | | | |
|---|---|---|---|---|---|---|
| No. | Experimental sample name | Location | Steriliza tion time | Before steriliza tion | After steriliza tion | Leakage |
| 1 | w-1 | Center of upper part | 50 min | 414.2 | 414.2 | 0.0 |
| 2 | w-2 | Right of upper part | 50 min | 413.0 | 412.8 | 0.2 |
| 3 | w-3 | Center of upper part | 60 min | 413.6 | 413.6 | 0.0 |
| 4 | w-4 | Right of upper part | 60 min | 415.9 | 415.6 | 0.3 |
| 5 | f-1 | Upper middle part | 60 min | 412.9 | 394.6 | 18.3 |
| 6 | f-2 | Middle part | 60 min | 410.0 | 385.2 | 24.8 |
| 7 | f-3 | Upper middle part | 50 min | 411.1 | 386.7 | 24.4 |
| 8 | f-4 | Lower part | 50 min | 414.2 | 395.2 | 19.0 |
| 9 | 01-01 | Upper middle part | 50 min | 413.2 | 412.8 | 0.4 |
| 10 | 02-01 | Middle part | 50 min | 413.4 | 413.3 | 0.1 |
| 11 | 01-02 | Upper middle part | 60 min | 415.2 | 414.8 | 0.4 |
| 12 | 02-02 | Middle part | 60 min | 414.5 | 414.2 | 0.3 |

| | | | | | | |
|---|---|---|---|---|---|---|
| w is a sample for leakage check, f is a sample of ripened kimchi, 01 is a sample of control, and 02 is a sample of lactic acid bacteria 10^5. | | | | | | |

- The results were not significant when the leakage of the 50 min product was compared with the leakage of the 60 min product.
- The leakage of samples at the upper part was presumed to be the largest since the samples received steam directly, but the leak phenomenon did not occur in products of which the weight was adjusted to 200 g by adding water.
- Rather, the leakage from ripened kimchi that was not directly affected by steam was great.
- The phenomenon that the lid was taken off did not occur in any of the samples.

### 4) Results of microbiological experiment

FIG. 12 illustrates samples used in experiment from the left, the order is 1-control (50 min), 1-control (60 min), 2-lactic acid bacteria (50 min), 2-lactic acid bacteria (60 min), and ripened kimchi.

FIGS. 13 to 16 illustrate incubation results.
- Viable bacteria count results

**Table 10]**

| Sample name | Viable bacteria count | Survival rate (%) |
|---|---|---|
| Initial bacteria-1 | 4.17E+06 | 100.00% |

| Initial bacteria-2 | 1.40E+07 | 100.00% |
|---|---|---|
| 1-1 | 4.50E+03 | 0.11% |
| 1-2 | 4.27E+03 | 0.10% |
| 2-1 | 2.80E+02 | 0.02% |
| 2-2 | 1.30E+02 | 0.01% |

The survival rate is a value expressed as the ratio of viable bacteria count in the 60min sample to that in the 50 min sample.

FIG. 17 illustrates samples from the left, the order is a control group, 2-1 (lactic acid bacteria), and 1-1 (control).
- As in the previous experiment (23_008), the sterilization process was stopped for 5 minutes at 65°C and for 5 minutes at 75°C, this led to an effect of decreasing the temperature difference between the inside of the product and the inside of the sterilizer, and it was judged that the burst phenomenon disappeared.
- In the experiment to check the leakage, products in preparation for leak were placed at the location that directly received steam, but it was judged from the results that the leakage was almost not directly affected by steam but varied depending on the degree of ripening.

The vegan kimchi made by the making process according to an embodiment of the present invention is not only highly palatable as the vegan kimchi has enhanced savory and deep tastes without containing salted seafood, green onions, and garlic, which are the main ingredients of napa cabbage kimchi, but is also of high quality as the vegan kimchi has enhanced antioxidant activity, and can be safely consumed by vegetarians as well.

While the present invention has been described with respect to the specific embodiments, it will be apparent to those skilled in the art that various changes and modifications may be made without departing from the spirit and scope of the invention as defined in the following claims.

## Claims

1. A method for making vegan kimchi distributed at room temperature, comprising:
(1) selecting napa cabbage for salting, cutting the napa cabbage into a predetermined size, soaking the cut napa cabbage in brine having a salt concentration of 4% to 5% at 15°C to 25°C for 10 to 18 hours, and then performing desalting and washing to prepare salted napa cabbage;
(2) mixing white radish at 18% to 22%, green onion at 5% to 7%, onion at 5% to 7%, cabbage at 2.5% to 3.5%, whole garlic at 1.5% to 2.5%, dried shiitake mushrooms at 1.0% to 2.0%, kelp at 0.3% to 0.6%, water at 58% to 61% by weight and heating the mixture for 9 to 11 hours to prepare vegetable broth;
(3) preparing the salted napa cabbage to be a proportion of 75% to 79% based on 1 kg of kimchi and preparing kimchi condiment containing the vegetable broth at 4.5% to 6.0%, white radish at 4.0% to 5.0%, red pepper powder at 2.5% to 3.0%, salt at 2.2% to 2.8%, garlic at 1.7% to 2.1%, plum extract at 1.6% to 2.0%, glutinous rice paste at 0.4% to 0.6%, green onion at 0.8% to 1.2%, onion at 0.2% to 0.4%, ginger at 0.3% to 0.5%, white sugar at 0.5% to 0.7%, lactic acid bacteria at 0.04% to 0.06%, soybean flour at 0.4% to 0.6%, and enzymatically modified stevia at 0.005% to 0.007%; and
(4) mixing the prepared salted napa cabbage with the prepared vegetable broth and kimchi condiment at a ratio of 70:30 to make kimchi.

2. The method for making vegan kimchi distributed at room temperature according to claim 1,
wherein the kimchi made as above is ripened under conditions of a fermentation temperature of 15°C ± 5°C and a ripening time of 48 ± 12 hours until a pH reaches 4.3 to 4.7.

3. The method for making vegan kimchi distributed at room temperature according to claim 2,
wherein the ripened kimchi is filled in a container and sterilized by heating using a sterilization device consisting of a hot water tank or a steam sterilization tank under conditions of 95°C ± 5°C and 60 ± 10 minutes based on the sterilization device and 80°C ± 5°C and 15 ± 5 minutes based on an internal temperature of the kimchi, and intermittent temperature pattern control with two rest periods at 5-minute intervals is performed to prevent kimchi liquid inside the container from sticking.

4. The method for making vegan kimchi distributed at room temperature according to claim 3,
wherein a shrink film and a label are attached to the sterilized kimchi container, cooling is performed to apply contraction vacuum pressure to the inside of the kimchi container so that the inside of the kimchi container is maintained in a completely sealed state, and then the kimchi container is stored in a refrigerator at a low temperature.
